Europäisches Patentamt

European Patent Office

Office européen des brevets

(11) Numéro de publication: **0 133 116**

**A1**

# (12) DEMANDE DE BREVET EUROPEEN

(21) Numéro de dépôt: **84401523.0**

(51) Int. Cl.⁴: **F 25 B 15/00**

(22) Date de dépôt: **19.07.84**

(30) Priorité: **19.07.83 ES 525371**

(43) Date de publication de la demande:
**13.02.85 Bulletin 85/7**

(84) Etats contractants désignés:
**AT BE CH DE FR GB IT LI LU NL SE**

(71) Demandeur: **Garcia Sesen, Antonio**
**Ronda Guinardo, 2-6-2a**
**Barcelona(ES)**

(71) Demandeur: **Martin, René**
**77 boulevard Montparnasse**
**F-75006 Paris(FR)**

(72) Inventeur: **Garcia Sensen, Antonio**
**Ronda Guinardo 2-6-2a**
**Barcelona(ES)**

(74) Mandataire: **Beauchamps, Georges et al,**
**Cabinet Z.Weinstein 20, avenue de Friedland**
**F-75008 Paris(FR)**

(54) **Système thermodynamique pour machines d'absorption réversibles.**

(57) Le système thermodynamique faisant l'objet de l'invention est caractérisé en ce qu'il consiste en un cycle thermodynamique qui se déroule entre deux étapes polytropiques, l'une ascendante évaporative et l'autre descendante absorbante, symétriques et opposées, et dont l'étape ascendante permet de pomper de la chaleur depuis un niveau trés bas du cycle jusqu'à un niveau plus élevé, de préférence le plus élevé du cycle, où la chaleur est transférée à un niveau inférieur dans l'étape descendante, ce qui permet d'élever la température sans consommation théorique d'énergie.

L'invention est destinée à être appliquée aux machines à absorption réversibles.

./...

Croydon Printing Company Ltd.

FIG. 1

1

Système thermodynamique pour machines d'absorption réversibles.

La présente invention a pour objet un système ou procédé thermodynamique qui determine un cycle thermodynamique pour machines à absorption réversible.

Le cycle ou principe thermodynamique du système de la présente invention met en relief le fait que les machines de réfrigération et, en définitive, tout cycle de pompe à chaleur négative ou positive, peuvent travailler avec des coefficients thermodynamiques très supérieurs à l'unité.

D'après le cycle de Carnot, le fonctionnement à des coefficients thermodynamiques supérieurs à l'unité dépend uniquement des températures ou sources froide, intermédiaire et chaude.

Comme on le sait, le rendement d'un cycle de Carnot de chaleur-travail est donné par la formule :

$$\xi = \frac{T_1 - T_0}{T_1}$$

Inversement, le rendement d'un cycle de Carnot pour une machine frigorifique actionnée par un moteur est donné

par la formule :

$$\xi = \frac{T_1}{T_1 - T_0}$$

D'autre part, le rendement d'un cycle de Carnot adapté à une machine frigorifique fonctionnant à la chaleur, appelée machine à absorption, est obtenu par la formule :

$$\xi = \frac{T_1}{T_1 - T_0} \times \frac{T_2 - T_0}{T_2}$$

Finalement, le rendement (COP) du cycle de Carnot adapté aux machines frigorifiques à absorption dont les sources $T_2$, $T_1$ et $T_0$ (froide, chaude et intermédiaire) ne sont pas fixes, mais variables et "polytropiques",est donné par la formule précédente mais avec des variations infinitésimales de la temperature dans les intervalles de températures établis :

$$\mathcal{E} = \frac{\int_{tx}^{ty} dT_1}{\int_{tx}^{ty} dT_1 - \int_{tz}^{tx} dT_0} \times \frac{\int_{ty}^{tu} T_2 - \int_{tz}^{tx} T_0}{\int_{ty}^{tu} T_2}$$

Comme on peut le voir, le cycle de Carnot appliqué tant aux machines frigorifiques à absorption, fonctionnant à chaleur-chaleur à sources fixes qu'aux machines frigorifiques à absorption comportant des sources variables polytropiques, détermine que, pour des températures de travail de, par exemple, + 10°C à + 40°C, utilisant une solution d'ammoniac, le rendement (COP) peut atteindre théoriquement des valeurs de 4 et 5 pour un (1). Néanmoins, en réalité, dans les cycles de fonctionnement actuels de ces machines, on ne dépasse en aucun cas l'unité
et la normale est que les valeurs du COP soient de 0,4 à
0,6 pour l'unité.

Le cycle du système selon l'invention permet d'obtenir,
par apport de chaleur dans l'étape haute du cycle, des
rendements pratiques proches de 0,5 à 0,7 de ceux qui
sont prévus dans le cycle théorique, en atteignant un COP
réel de 2 à 3 pour un (1), ce qui permet d'obtenir, en
application réelle, des machines frigorifiques à absorption possédant des rendements exactement égaux à ceux
que l'on obtient dans les machines thermodynamiques utilisant un compresseur mécanique, pour de hautes températures d'évaporation, par exemple pour l'air conditionné
et les pompes à chaleur, et des rendements supérieurs
pour les basses températures. En outre, ces machines,
pouvant fonctionner avec un combustible primaire tel que
par exemple du gaz, etc., l'emportent sur le système à
compression mécanique, puisque, à égalité de rendement
thermodynamique, leur combustible est meilleur marché et
donc ces machines sont beaucoup plus économiques en service.

La présente invention consiste en un système utilisant
un cycle thermodynamique qui se déroule en deux étapes
polytropiques, l'une ascendante évaporative et l'autre
déscendante absorbante, symétriques et opposées, l'étape
ascendante permettant de pomper de la chaleur d'un niveau très bas du cycle au niveau le plus élevé où la
chaleur est transmise de l'étape descendante à l'étape
ascendante, ce qui permet de réaliser une élévation de
la température sans consommation théorique d'énergie.

L'invention sera mieux comprise, et d'autres buts, caractéristiques, détails et avantages de celle-ci apparaîtront plus clairement au cours de la description explicative qui va suivre faite en référence aux dessins annéxes donnés uniquement à titre d'exemple illustrant plusieurs modes de réalisation de l'invention, et dans lesquels :

- la figure 1 illustre le cycle théorique du système selon l'invention ;

- la figure 2 représente ce cycle théorique appliqué à une solution aqueuse-ammoniacale ;

- la figure 3 représente schématiquement un mode de réalisation pratique et non-limitatif du cycle appliqué à un circuit monotube actionné par un mélange eau-ammoniac.

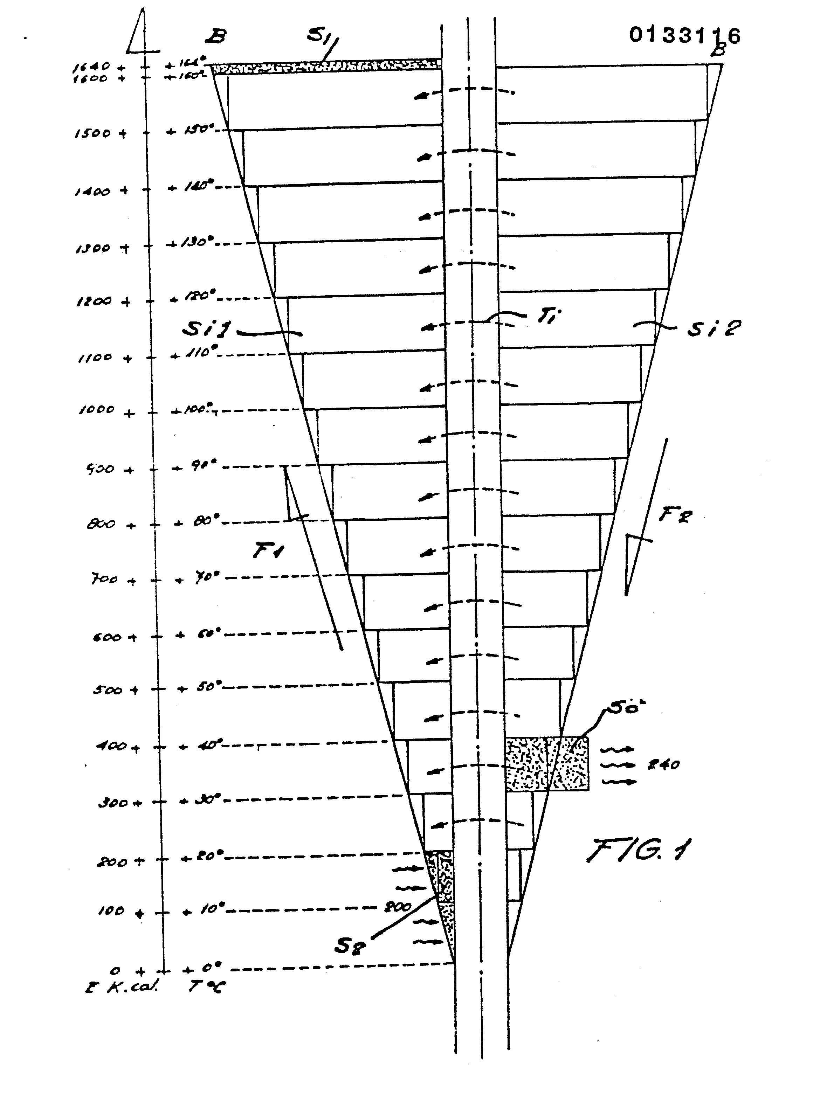

Comme il ressort des dessins, le cycle théorique représenté sur la figure 1 est un cycle thermodynamique idéal dans lequel, pour simplifier, toutes les courbes du cycle ont été remplacées par des droites. Sur le graphique, on a représenté l'enthalpie (E) et la température (T) sur le même axe d'ordonnées.

Comme on peut l'observer, le cycle se déroule entre deux étapes polytropiques dans lesquelles la température, la pression et l'enthalpie sont variables et dont l'une, ascendante ou évaporative, correspond au côté gauche du graphique et à la courbe F1(représentée par une droite), tandis que l'autre, descendante ou absorbante, correspond au côté droit du graphique et à la courbe F2 (représentée par une droite).

Dans une première partie de l'étape ascendante ou évaporative, qui correspond à des niveaux de température très bas, par exemple entre 0 et + 20°C, le cycle se comporte comme un cycle frigorifique, permettant une entrée de chaleur au niveau bas précité, cette entrée de chaleur correspondant à l'aire pointillée S2 du graphique.

Dans la partie supérieure du graphique, qui correspond aux niveaux élevés, se produit l'effet inverse de l'évaporation, c'est-à-dire l'absorption. Comme on peut l'observer, les parties supérieure et inférieure se correspondent du fait que la chaleur dégagée dans l'étape supérieure (effet absorbeur), représentée par exemple par l'aire du rectangle Si2, est transmise à la partie inférieure (effet évaporateur) représentée par l'aire du rectangle Si1 dont la surface est égale à celle du rectangle Si2. Ce transfert est représenté sur le graphique par la flèche Ti. Ceci permet de monter dans l'echelle des températures avec un minimum d'énergie, qui serait nulle dans le cycle théorique, mais qui ne l'est pas dans le cycle réel, pour tenir compte d'un accroissement de T. On peut observer que, aux niveaux les plus élevés de l'echelle avec une faible longueur dans l'echelle enthalpique (par exemple entre 1 600 et 1 640 kcal et entre 160 et 164°C) on couvre une aire très grande, représentée par le rectangle S1, dont l'énergie ou la chaleur peut être réstituée aux niveaux que l'on désire, soit inférieurs, soit supérieurs ; par exemple, dans le cas illustré, à un niveaux inférieur représenté par l'aire pointillée S0 située entre 30 et 40°C.

En définitive, on peut signaler que, pour une aire enthalpique donnée (évaporateur), plus basse est la source thermique "intermédiaire", plus petite sera la longueur enthalpique correspondant à la chaleur apportée et, par conséquent, plus le coefficient thermodynamique du cycle sera élevé.

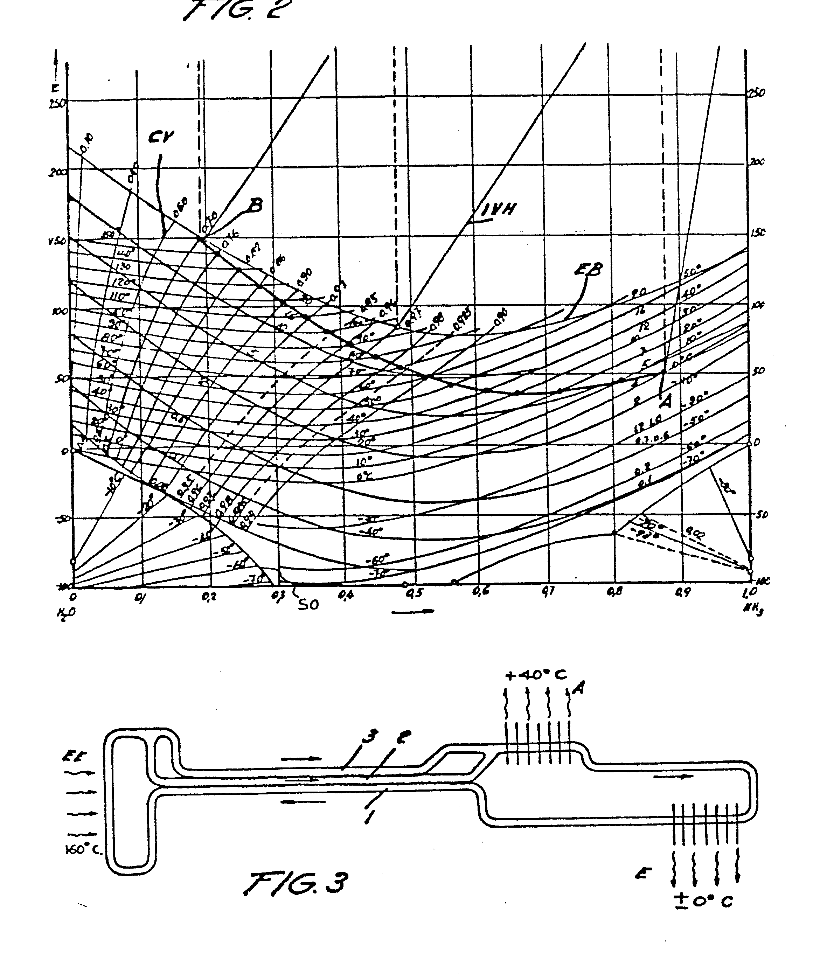

Pour illustrer le cycle théorique représenté sur la figure 1, on décrit dans ce qui suit un cas pratique d'évolution d'une solution ammoniacale en se reportant à la figure 2, qui représente le diagramme de Mollier.

Sur l'axe des abscisses, sont portées les concentrations de l'ammoniac, et sur l'axe des ordonnées, l'enthalpie E. De plus, sont portées une série de courbes qui sont fonctions de la température T : courbe des contenus de vapeur en équilibre CV, courbe de solidification SO, courbe d'ébullition EB, courbe isobare de vapeur humide IVH, etc.

Le cycle théorique du présent système appliqué à l'évolution de la solution ammoniacale correspond à la courbe F entre les points A et B, lesquels correspondent exactement aux points A et B du cycle théorique représenté sur la figure 1. Comme on peut l'observer, au cours du cycle théorique, la transformation se produit suivant ladite courbe F, en se déplaçant de A vers B et inversement sur la même courbe, sans consommation d'énergie. Si on réalise le même cycle en réalité, le déplacement ne se fera pas exactement sur la même courbe, mais tendra à suivre des courbes très rapprochées entre les points A et B de sorte que la très petite aire comprise entre les deux courbes représentera la petite consommation d'énergie due à l'accroissement de T mentionné plus haut, qui, de toute façon, représente un progrès dans ce domaine.

Le cycle précité appliqué à une machine fonctionnant à l'ammoniac-eau, aux substances connues sous la dénomination commerciale "Fréon", etc., permet à cette machine de travailler entre un absorbeur et un évaporateur, puisqu'il n'existe pas de phase de condensation isobare.

En ce sens, on a représenté sur la figure 3 un exemple simplifié de réalisation pratique du cycle selon l'invention dans un circuit monotube d'eau-ammoniac. Dans cet exemple de réalisation, on a omis tous les éléments auxiliaires qui permettent son fonctionnement, tels que pompes de circulation, ventilateurs, etc.

La réalisation simplifiée qui est représentée sur la figure 3 comprend un conduit constitué de deux tubes ou tronçons 1 et 2 dans lesquels la solution eau-ammoniac circule en sens inverse l'un de l'autre. Le tube 1 est ascendant évaporateur, tandis que le tube 2 est descendant absorbeur. La solution circule dans lesdits tubes depuis l'évaporateur E, où s'effectue la production de froid à la température de $\pm$ 0°C vers l'absorbeur A dans lequel se produit la cession de la chaleur à l'ambiance à une température de + 40°C, en passant par une étape EE d'entrée d'énergie extérieure à 160°C. Le tube ascendant 1 et le tube descendant 2, ainsi qu'un troisième tube ou tronçon additionel 3, appelé égaliseur des pressions de la solution ammoniacale, sont en contact entre eux par une soudure, de sorte que s'établisse un contact thermique entre eux.

Bien entendu, les modifications que l'on peut apporter à la réalisation pratique du cycle sont multiples.

En définitive, le système selon l'invention opère fondamentalement avec deux effets physiques, l'un ascendant ou évaporatif et l'autre descendant ou absorbant, et il élimine les condensations isobares.

Comme on a pu l'observer, le contenu de chaleur captée dans l'étape basse du cycle est élevé en température par échange thermique avec l'étape descendante, ce qui réduit la consommation d'énergie à un minimum. Il n'est pas absolument nécessaire que le contenu de chaleur captée dans l'étape basse du cycle soit élevée au point le plus élevé du cycle, puisque, si on le désire, on peut seulement l'élever jusqu'à un point intermédiaire tel que la température de cession de la chaleur à l'ambiance.

Le système peut travailler en qualité de pompe à chaleur, en mettant à profit la cession de chaleur de l'étape descendante avec les mêmes avantages que si l'on travaillait avec le système de machine frigorifique.

Il convient de signaler que l'on peut utiliser indifféremment différents types d'agents absorbants et solvants tels que : eau-ammoniac-hydrogène, "Fréons", bromure de lithium, eau, etc.

De même, la réalisation du système n'est pas limitée à un modèle pratique déterminé.

Bien entendu, les applications du cycle thermodynamique objet du système selon l'invention sont très nombreuses.

Revendications

1. Système thermodynamique pour machines à absorption réversibles, caractérisé en ce qu'il consiste en un cycle thermodynamique qui se déroule entre deux étapes polytropiques, l'une ascendante évaporative et l'autre descendante absorbante, symétriques et opposées, et dont l'étape ascendante permet de pomper de la chaleur depuis un niveau très bas du cycle jusqu'à un niveau plus élevé, de préférence le plus élevé du cycle, où la chaleur est transférée à un niveau inférieur dans l'étape descendante, ce qui permet d'élever la température sans consommation théorique d'énergie.

2. Système thermodynamique selon la revendication précédente, caractérisé en ce que le contenu de la chaleur captée dans l'étape basse du cycle est élevée en température par échange thermique avec l'étape descendante, ce qui réduit la consommation d'énergie au minimum.

3. Système thermodynamique selon les revendications précédentes, caractérisé en ce qu'il opère essentiellement avec deux effets physiques, l'un ascendant ou évaporatif et l'autre descendant ou absorbant, en éliminant ainsi les condenseurs isobares.

4. Système thermodynamique pour machines à absorption réversibles.

5. Machines à absorption réversibles, caractérisées en ce qu'elles comportent application du système thermodynamique faisant l'objet de l'une des revendications précédentes.

FIG. 1

FIG. 2

FIG. 3

Office européen
des brevets

**RAPPORT DE RECHERCHE EUROPEENNE**

EP 84 40 1523

## DOCUMENTS CONSIDERES COMME PERTINENTS

| Catégorie | Citation du document avec indication, en cas de besoin, des parties pertinentes | Revendication concernee | CLASSEMENT DE LA DEMANDE (Int Cl.4) |
|---|---|---|---|
| A | US-A-2 182 453 (SELLEW)<br>* en entier * | 1-5 | F 25 B 15/00 |
| | --- | | |
| A | FR-A-2 488 379 (C.N.R.S.)<br>* en entier * | 1 | |
| | --- | | |
| A | EP-A-0 056 147 (MARKFORT)<br>* en entier * | 1 | |
| | --- | | |
| A | DE-A-3 113 063 (ZERWECK)<br>* en entier * | 1 | |
| | --- | | |
| A | DE-C- 936 336 (PERLICK) | | |
| | ----- | | |

**DOMAINES TECHNIQUES RECHERCHES (Int. Cl.4)**

F 25 B
F 24 J

Le présent rapport de recherche a été établi pour toutes les revendications

| Lieu de la recherche | Date d'achèvement de la recherche | Examinateur |
|---|---|---|
| LA HAYE | 26-10-1984 | SILVIS H. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82